# EUROPÄISCHE PATENTSCHRIFT

(11) **EP 1 295 191 B1**
(45) Veröffentlichungstag und Bekanntmachung des Hinweises auf die Patenterteilung: **16.02.2005**
(21) Anmeldenummer: 01947319.8
(22) Anmeldetag: 25.05.2001
(51) Int. Cl.: G05D 16/20

(54) **PNEUMATISCHE DRUCKSTEUEREINRICHTUNG**
PNEUMATIC PRESSURE CONTROL DEVICE
SYSTEME PNEUMATIQUE DE REGULATION DE PRESSION

(30) Priorität: 06.06.2000 DE 10027873
(43) Veröffentlichungstag der Anmeldung: 26.03.2003
(73) Patentinhaber: Festo Ag & Co., 73734 Esslingen (DE)
(72) Erfinder: DUEBEL, Rainer, 85598 Baldham (DE); BURGER, Stefan, 81379 München (DE)
(74) Vertreter: Abel, Martin, Dipl.-Ing.
(86) Internationale Anmeldenummer: PCT/EP2001/005992
(87) Internationale Veröffentlichungsnummer: WO 2001/095045

(56) Entgegenhaltungen:
- EP-A- 0 906 010
- US-A- 4 932 630

## Beschreibung

Die Erfindung bezieht sich auf eine pneumatische Drucksteuereinrichtung zur Erzeugung von zumindest zwei unterschiedlichen Drücken in einer Nutzleitung durch Verstellmittel, mit einer Strahlpumpe, die einen in eine Ausströmöffnung mündenden Hauptstromkanal und einen von diesem abzweigenden Nebenstromkanal aufweist, an den die Nutzleitung angeschlossen ist, wobei die Verstellmittel als der Ausströmöffnung zugeordnete verstellbare Drossel ausgebildet sind, die den Strömungsquerschnitt der Ausströmöffnung verändert, wobei die Strömung des Hauptstromkanals durch Verstellen der Drossel beeinflussbar ist und in Abhängigkeit davon die Druckverhältnisse des Nebenstromkanals veränderbar sind.

Eine derartige Einrichtung ist in der EP 0 906 010 A2 beschrieben, aus der eine Vorrichtung zum Bestücken von Bauelementträgern mit elektronischen Bauelementen mittels eines revolverartigen Bestückkopfes zu entnehmen ist, wobei die Bauelemente mittels Unterdruck angesaugt werden und an ihrer Bestückposition durch Wegnahme des Unterdrucks abgestoßen werden. Die Unterdruckerzeugung erfolgt mittels einer Strahlpumpe, die einen Hauptstromkanal aufweist, von dem ein Nebenstromkanal abzweigt. Dem Hauptstromkanal ist ferner eine Ausströmöffnung zugeordnet, vor der ein Drossel angeordnet ist.

Die Druckverhältnisse des Nebenstromkanals können durch Beeinflussung der Strömung des Hauptstromkanals verändert werden und zwar derart, dass die Drossel zur Austrittsöffnung hin oder von dieser weg bewegt wird.

Üblicherweise werden unterschiedliche Drücke in einer Nutzleitung durch Umschalten eines Dreiwegeventils zwischen zwei Zuleitungen erzeugt, die die gewünschten Drücke führen.

Ferner ist es üblich, zur Erzeugung von Vakuum Strahlpumpen zu verwenden, bei denen eine mit Überdruck beaufschlagte Strahldüse in einen Hauptstromkanal hineinbläst. Im Übergangsbereich zwischen der Strahldüse und dem Hauptstromkanal ist ein Nebenstromkanal abgezweigt, in dem sich infolge der hohen Strömungsgeschwindigkeit des Mediums Unterdruck ausbildet.

Der Erfindung liegt die Aufgabe zugrunde, ein einfache Einrichtung zu schaffen, durch die in eine angeschlossene Nutzleitung mit Drücken von unterschiedlichem Niveau versorgt werden kann.

Diese Aufgabe wird durch die Erfindung gemäß Anspruch 1 gelöst.

Die im Nebenstromkanal benötigten Druckunterschiede werden durch die Beeinflussung des Hauptstromes erzeugt, ohne dass dazu ein Ventil benötigt wird. Da der Staudruck berührungslos beeinflusst werden kann, ist ein Einsatz insbesondere dort von Vorteil, wo ein häufiger und schneller Druckwechsel stattfindet. Die Rückstaumittel können z.B. als gegen die Ausströmöffnung gerichtete Gegenstromdüse ausgebildet sein, deren Durchsatz veränderbar ist. Die Rückstaumittel können ferner z.B. als senkrecht zum Hauptstromkanal bewegbarer Schieber ausgebildet sein. Ein besonderer Vorteil der Einrichtung besteht darin, dass nur eine Zuleitung benötigt wird, die leichter als eine Doppelleitung in engen Räumen verlegt und angeschlossen werden kann. Dadurch ist es möglich, die Steuereinrichtung nahe am Verbraucher anzuordnen, so dass der Druckwechsel besonders schnell vonstatten gehen kann.

Die Beeinflussung kann z.B. so gesteuert werden, dass sich die Strömungsgeschwindigkeit im Hauptstromkanal verringert, wodurch das im Nebenstromkanal wirksame Vakuum aufgehoben oder je nach der Rückstaustärke in einen Überdruck umgewandelt werden kann. Von Vorteil ist es dabei, den Hauptstromkanal zur Austrittsöffnung trompetenartig zu erweitern, um eine möglichst widerstandsarme Strömung zu erreichen. Die Rückstaumittel können z.B. in lediglich zwei Funktionsstellungen fixierbar sein, so dass die Drucksteuereinrichtung lediglich in der Art eines Umschaltventils wirkt. Es ist aber auch eine mehrstufige Verstellung zu Einstellung beliebiger Nutzdrücke möglich.

Die blendenartige Drossel kann durch Verschieben gegen die Ausströmöffnung oder quer zu dieser betätigt werden, ohne dass es zu einer gegenseitigen Berührung kommt. Dies vereinfacht die mechanische Betätigung und Funktion der pneumatischen Vorgänge und kann ohne mechanischen Verschleiß vonstatten gehen, wobei die Drossel mechanisch einfach ausgebildet und geführt werden kann.

Durch die Weiterbildung nach Anspruch 4 ist es möglich, die benötigten Drücke feinstufig regelbar zu steuern und unterschiedlichen Einsatzbedingungen anzupassen.

Die Wegmesseinrichtung ermöglicht eine schnelle Verschiebung der Drossel in eine bestimmte Stellung mit einem entsprechenden definierten Druck in der Nutzleitung.

Durch den Drucksensor und die Steuerung ist es möglich den Druck in der Nutzleitung genau einzustellen und unabhängig vom Durchsatz konstant zu halten.

Die Linearantriebe nach den Ansprüchen 5 bis 7 weisen eine hohe Halte- und Verstellkraft auf so dass eine schnelle Verstellung und sichere Fixierung der Drossel möglich ist. Die Tauchspule nach Anspruch 5 kann z.B. in der Art einer Lautsprecherspule mit einer Membran gekoppelt sein, die den Spulenraum hermetisch abdichtet, so dass dieser mit einer schwingungsdämpfenden Flüssigkeit gefüllt werden kann.

Im folgenden wird die Erfindung anhand eines in der Zeichnung dargestellten Ausführungsbeispieles näher erläutert.
- Figur 1: einen Längsschnitt durch eine pneumatische Drucksteuereinrichtung,
- Figur 2: die Drucksteuereinrichtung nach Anspruch 1 in einer anderen Funktionsstellung.

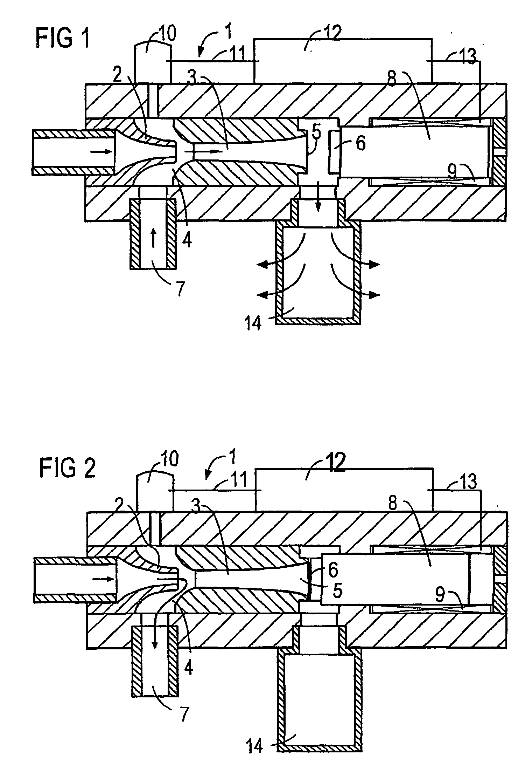

In Figur 1 ist eine pneumatische Drucksteuereinrichtung in einem axialen Längsschnitt dargestellt. Ein Strahlpumpe 1 weist eine an eine Überdruckleitung angeschlossene Strahldüse 2 auf, die auf einen Hauptstromkanal 3 gerichtet ist, der in der Art einer Venturidüse ausgebildet ist. Im Übergangsbereich zwischen der Strahldüse 2 und dem Hauptstromkanal 3 ist ein Nebenstromkanal 4 senkrecht zum Hauptstromkanal 3 angesetzt, der sich zu einer Ausströmöffnung 5 hin trompetenartig öffnet. Diese mündet in eine Abluftkammer, aus der das Medium durch einen Schalldämpfer 14 in das Freie strömt. An den Nebenstromkanal 4 ist eine Nutzleitung 7 angeschlossen.

Eine Drossel 6 befindet sich in einem Abstand zur Ausströmöffnung 5, der einen Rückstau der ausströmenden Abluft weitgehend vermeidet. Im Bereich der Strahldüse 2 ist die Strömungsgeschwindigkeit so hoch, dass sich dort ein Unterdruck bildet. Der sich im Nebenstromkanal 4 und in der Nutzleitung 7 fortsetzt. Die Drossel 6 ist an einem Hubmagneten 8 befestigt, der in axialer Richtung mittels einer elektrischen Spule 9 gegen die Strahlrichtung des ausströmenden Mediums verschiebbar ist.

Ein Drucksensor 10 misst den Druck in im Nebenstromkanal 4 und ist über eine Datenleitung 11 mit einer elektronischen Steuerung 12 verbunden, die über eine Steuerleitung 13 mit der Spule 9 verbunden ist. Je nach der über die Steuerleitung 13 zugeführten Stromstärke verändert sich die Induktivität der Spule 9 und damit die Hubstellung des Hubmagneten 8 mit der Drossel 6.

In Figur 2 ist die blendenartige Drossel 6 in einer Schaltstellung gezeigt, in der der Abstand zur Ausströmöffnung 5 erheblich verringert ist. Die Abluft kann nun nicht mehr frei ausströmen und wird im Hauptstromkanal 3 so stark zurückgestaut, dass im Nebenstromkanal 4 ein Überdruck entsteht.

## Patentansprüche

1. Pneumatische Drucksteuereinrichtung zur Erzeugung von zumindest zwei unterschiedlichen Drücken in einer Nutzleitung durch Verstellmittel, mit einer Strahlpumpe, die einen in eine Ausströmöffnung (5) mündenden Hauptstromkanal (3) und einen von diesem abzweigenden Nebenstromkanal (4) aufweist, an den die Nutzleitung (7) angeschlossen ist, wobei die Verstellmittel als der Ausströmöffnung (5) zugeordnete verstellbare Drossel (6) ausgebildet sind, die den Strömungsquerschnitt der Ausströmöffnung verändert, wobei die Strömung des Hauptstromkanals (3) durch Verstellen der Drossel (6) beeinflussbar ist und in Abhängigkeit davon die Druckverhältnisse des Nebenstromkanals (4) veränderbar sind,
**dadurch gekennzeichnet,**
**dass** die Drossel (6) mittels eines steuerbaren Antriebs (z.B. 8, 9) verschiebbar ist, wobei der Antrieb eine Wegmesseinrichtung aufweist und dass dem Nebenstromkanal (4) ein Drucksensor (10) zugeordnet ist, wobei der Antrieb und der Drucksensor (10) mit einer Steuerung (12) verbunden sind, die die Messsignale des Drucksensors (10) auswertet und die in Abhängigkeit von diesen den Antrieb (z.B. 8) in eine neue Drosselposition steuert.

2. Drucksteuereinrichtung nach Anspruch 1,
**dadurch gekennzeichnet,**
**dass** die blendenartige Drossel (6) vor die Ausströmöffnung (5) bewegbar ist.

3. Drucksteuereinrichtung nach Anspruch 2,
**dadurch gekennzeichnet,**
**dass** die Drossel (6) in der Ausströmrichtung zur Ausströmöffnung (5) hin verschiebbar ist.

4. Drucksteuereinrichtung nach Anspruch 2 oder 3,
**dadurch gekennzeichnet,**
**dass** die Drossel (6) mehrstufig verschiebbar und unmittelbar an einem Antriebselement (z.B. 8) befestigt ist.

5. Drucksteuereinrichtung nach Anspruch 1,
**dadurch gekennzeichnet,**
**dass** der Antrieb als Tauchspule ausgebildet ist, an der die Drossel befestigt ist.

6. Drucksteuereinrichtung nach Anspruch 1,
**dadurch gekennzeichnet,**
**dass** der Antrieb als Hubmagnet (8) ausgebildet ist, an dessen verschiebbarem Magnetteil die Drossel (6) befestigt ist.

7. Drucksteuereinrichtung nach Anspruch 1,
**dadurch gekennzeichnet,**
**dass** der Antrieb als Linearmotor ausgebildet ist, an dessen Verschiebeteil die Drossel (6) befestigt ist.

## Claims

1. Pneumatic pressure control device for the generation of at least two different pressures in a service line through adjustment means, with a jet pump, which has a main flow passage (3) leading into an outlet port (5) and a secondary flow passage (4) branching off from the main flow passage, to which the service line (7) is connected, wherein the adjustment means are in the form of an adjustable restrictor (6) assigned to the outlet port (5) and which changes the flow cross-section of the outlet port, wherein the flow of the main flow passage (3) may be influenced by adjusting the restrictor (6), and as a function of this, the pressure ratios of the secondary flow passage (4) may be varied,
**characterised in that**
the restrictor (6) can be made to slide by means of a controllable drive (e.g. 8, 9), wherein the drive has a position measuring device, and that the secondary flow passage (4) is assigned a pressure sensor (10), wherein the drive and the pressure sensor (10) are connected to a control unit (12) which evaluates the measuring signals of the pressure sensor (10) and, based on these signals, moves the drive (e.g. 8) into a new restrictor position.

2. Pressure control device according to claim 1,
**characterised in that**
the diaphragm-like restrictor (6) is movable in front of the outlet port (5).

3. Pressure control device according to claim 2,
**characterised in that**
the restrictor (6) may be slid in the outflow direction towards the outlet port (5).

4. Pressure control device according to claim 2 or 3,
**characterised in that**
the restrictor (6) is able to slide in several stages and is attached directly to a drive element (e.g. 8).

5. Pressure control device according to claim 1,
**characterised in that**
the drive is in the form of a plunger coil, to which the restrictor is attached.

6. Pressure control device according to claim 1,
**characterised in that**
the drive is in the form of a solenoid (8), with the restrictor (6) fastened to its slidable magnetic part.

7. Pressure control device according to claim 1,
**characterised in that**
the drive is in the form of a linear motor, with the restrictor (6) fastened to its slidable part.

## Revendications

1. Dispositif pneumatique de régulation de pression permettant de générer au moins deux pressions différentes dans une conduite de service grâce à des moyens de réglage, comportant une pompe d'injection qui présente un canal d'écoulement principal (3) débouchant sur un orifice d'écoulement (5) et un canal d'écoulement secondaire (4) partant du premier, auquel est raccordée la conduite de service (7), les moyens de réglage étant configurés en tant qu'élément d'étranglement (6) réglable associé à l'orifice d'écoulement (5), et qui modifie la section transversale d'écoulement de l'orifice d'écoulement, l'écoulement du canal d'écoulement principal (3) pouvant être influencé par le réglage de l'élément d'étranglement (6) et les rapports de pression du canal d'écoulement secondaire (4) pouvant être modifiés en fonction de cela, **caractérisé en ce que** l'élément d'étranglement (6) est mobile au moyen d'un entraînement pouvant être commandé (par ex. 8, 9), l'entrainement présentant un dispositif de mesure de déplacement et **en ce qu'**un capteur de pression (10) est associé au canal d'écoulement secondaire (4), l'entraînement et le capteur de pression (10) étant reliés à une commande (12) qui exploite les signaux de mesure du capteur de pression (10) et qui, en fonction de ces signaux, commande l'entraînement (par ex. 8) pour définir une nouvelle position d'étranglement.

2. Dispositif de régulation de pression selon la revendication 1, **caractérisé en ce que** l'élément d'étranglement (6) de type diaphragme est mobile devant l'orifice d'écoulement (5).

3. Dispositif de régulation de pression selon la revendication 2, **caractérisé en ce que** l'élément d'étranglement (6) est mobile vers l'orifice d'écoulement (5) dans la direction d'écoulement.

4. Dispositif de régulation de pression selon la revendication 2 ou 3, **caractérisé en ce que** l'élément d'étrangement (6) est mobile selon plusieurs paliers et est directement fixé à un élément d'entraînement (par ex. 8).

5. Dispositif de régulation de pression selon la revendication 1, **caractérisé en ce que** l'entraînement est configuré en tant que bobine plongeante, à laquelle est fixé l'élément d'étranglement.

6. Dispositif de régulation de pression selon la revendication 1, **caractérisé en ce que** l'entraînement est configuré en tant qu'électroaimant (8), à la partie magnétique duquel est fixé l'élément d'étranglement (6).

7. Dispositif de régulation de pression selon la revendication 1, **caractérisé en ce que** l'entraînement est configuré en tant que moteur linéaire, à la partie mobile duquel est fixé l'élément d'étranglement (6).
